# EUROPÄISCHE PATENTSCHRIFT

(11) **EP 3 444 792 B1**
(45) Veröffentlichungstag und Bekanntmachung des Hinweises auf die Patenterteilung: **17.03.2021**
(21) Anmeldenummer: 17186469.7
(22) Anmeldetag: 16.08.2017
(51) Int. Cl.: F16M 11/08, F16M 11/18, F16P 3/14, G08G 1/01, G06K 9/00, G08G 1/015, G08G 1/04, G08G 1/14, G06T 15/00, G06T 17/00, G03B 17/56

(54) **SYSTEM ZUR OBJEKTERFASSUNG AUF FLÄCHEN, INSBESONDERE PARKPLÄTZEN**
SYSTEM FOR DETECTING OBJECTS ON SURFACES, IN PARTICULAR PARKING AREAS
SYSTÈME DE DÉTECTION D'OBJETS SUR DES SURFACES, EN PARTICULIER DES PLACES DE STATIONNEMENT

(43) Veröffentlichungstag der Anmeldung: 20.02.2019
(73) Patentinhaber: Gauff Telematics GmbH, 56743 Mendig (DE)
(72) Erfinder: MAURER, Michael, 56743 Mendig (DE); SCHNEIDER, Thorsten, 56743 Mendig (DE)
(74) Vertreter: WBH Wachenhausen Patentanwälte PartG mbB

(56) Entgegenhaltungen:
- EP-A1- 2 136 344
- CN-A- 106 704 778
- FR-A1- 3 010 221
- JP-A- S5 895 482
- US-A1- 2010 134 596
- US-A1- 2015 339 924
- US-A1- 2016 146 604
- US-A1- 2017 046 865

## Beschreibung

### HINTERGRUND

Die vorliegende Erfindung betrifft ein Objekterfassungssystem, welches verwendet werden kann, um Objekte, wie beispielsweise LKW, auf einer Fläche bzw. Großfläche wie bspw. auf einem Parkplatz zu erfassen.

Bei herkömmlichen Systemen zur Überwachung von Großflächen, auf welchen sich bewegbare Objekte, wie beispielsweise LKW, Autos, Container o.Ä. temporär aufhalten, wurden zur Bestimmung, ob auf der Fläche noch genügend Raum für weitere Objekte zur Verfügung steht, im allgemeinen die Ein- und Ausfahrten überwacht, wie im Folgenden beispielhaft mit Bezug auf einen LKW Parkplatz beschrieben werden soll.

Im Falle eines LKW-Parkplatzes an einer Autobahn wurde beispielsweise die Anzahl der ankommenden LKW sowie deren Länge an der Zufahrt überwacht. Zusätzlich wurde die Anzahl der abfahrenden LKW an der Ausfahrt überwacht. Durch Addition bzw. Subtraktion der ankommenden beziehungsweise abfahrenden LKW konnte die freie Kapazität des Platzes bestimmt werden.

Ein derartiges System muss jedoch in gewissen Abständen kalibriert werden, um eine zuverlässige Erfassung der freien Kapazitäten auch über einen längeren Zeitraum zu gewährleisten. Hierzu werden Kamerabilder des gesamten Parkplatzes händisch ausgewertet, um die aktuelle Anzahl parkender Fahrzeuge zu kalibrieren. Dies bedarf neben einem zusätzlichen Hardwareeinsatz einen signifikanten Personaleinsatz, welcher zusätzliche Kosten verursacht.

In der US 2016/146604 A1 ist ein Positionierungsverfahren für ein Vermessungsinstrument beschrieben. In der US 2010/134596 ist eine Vorrichtung zum dreidimensionalen Erfassen eines Raumbereichs beschrieben.

### ZUSAMMENFASSUNG DER ERFINDUNG

Es mag somit erwünscht sein, ein Objekterfassungssystem, insbesondere zur Überwachung von Parkplätzen und anderen Großflächen bereitzustellen, welches eine zuverlässige

Detektion von beliebig positonierten Objekten bei geringem Hardware- und Personaleinsatz ermöglicht.

Diese Aufgabe wird mit einem Objekterfassungssystem gemäß Anspruch 1 gelöst. Vorteilhafte Weiterbildungen sind Gegenstand der abhängigen Ansprüche.

Ein Objekterfassungssystem gemäß einem ersten Aspekt umfasst eine Erfassungsvorrichtung sowie eine Berechnungseinheit. Die Erfassungsvorrichtung weist hierbei eine Befestigungseinrichtung, einen Schwenkmotor wie z. B. einen Schrittmotor oder Servomotor, einen Schwenkarm, eine Ansteuereinheit und eine Datenerfassungseinheit auf.

Mithilfe der Befestigungseinrichtung kann die Erfassungsvorrichtung an einem Befestigungsobjekt, bspw. einer im wesentlichen vertikalen Fläche, angebracht werden. Bei dem Befestigungsobjekt kann es sich zum Beispiel um einen Masten bzw. Pfosten handeln.

Der Schwenkmotor, welcher bspw. als Schrittmotor oder Servomotor ausgebildet sein kann, ist hierbei mit der Befestigungseinrichtung bspw. mittels des Gehäuses, verbunden.

Der Schwenkarm ist wiederum derart mit dem Schwenkmotor gekoppelt, dass der Schwenkarm mittels des Schwenkmotors um eine Drehachse schwenkbar ist. Die kann bspw. durch direkte oder indirekte Kopplung der Achse des Schwenkmotors mit dem Schwenkarm mit oder ohne zwischengeschaltetem Getriebe erfolgen.

Beabstandet von der Drehachse, bspw. des Kopplungspunkt einer mit dem Schwenkmotor verbundenen Achse am Schwenkarm, ist die Datenerfassungseinheit angebracht. Bspw. kann der Datenerfassungseinheit am anderen Ende des Schwenkarms im Verhältnis zum Mittelpunkt des Schwenkarms angebracht sein. Die Beabstandung ermöglicht, sodass die Datenerfassungseinheit mit einem durch den Abstand entlang des Schwenkarms definierten Abstand um die Befestigungseinrichtung, bzw. den Masten oder Ähnliches mit dem Schwenkmotor durch Ansteuerung des Schwenkmotors mittels der Ansteuereinheit rotiert werden kann.

Durch die Rotation der Datenerfassungseinheit mittels des Schwenkraums kann der komplette Bereich um das Befestigungsobjekt (bspw. Posten bzw. Masten) erfasst werden, ohne dass durch den Masten ein Schlagschatten entsteht.

Dies erlaubt es der Berechnungseinheit einen 3D-Datensatzes aus den Daten der Datenerfassungseinheit und Daten bezüglich der Bewegung des Schwenkmotors zu berechnen.

Somit erlaubt diese Anordnung eine 360° Erfassung sämtlicher Objekte um das Befestigungsobjekt mit lediglich einer Datenerfassungseinheit.

Das System ist somit kostengünstig, da lediglich ein Datenerfassungseinheit benötigt wird. Auch eine händische Kalibrierung des Systems entfällt, da die komplette Fläche durch die Datenerfassungseinheit erfasst wird, und nicht nur beispielsweise die Ein- und Ausfahrten, wie in den bekannten Systemen.

Auch erlaubt das beschriebene System die Anordnung der Erfassungsvorrichtung in einer beliebigen Höhe beispielsweise an einem bereits bestehenden Masten auf einem Parkplatz. Herkömmliche Datenerfassungseinrichtungen könnten an diesen Masten nicht derartig angeordnet werden, ohne dass ein Schlagschatten entstehen würde. Sie müssten immer auf der Spitze des Mast angeordnet werden, womit keine optimale Ausrichtung des Systems in der Höhe möglich wäre.

Nach einem weiteren Aspekt ist das Objekterfassungssystem zur Erfassung von Objekten auf einer Fläche, insbesondere einer Großfläche, ausgebildet.

Entsprechend kann das System zur Überwachung von Flächen bzw. Großflächen wie Parkplätzen, Containerumschlagplätzen, Häfen oder ähnliches eingesetzt werden.

Nach einem weiteren Aspekt ist die Befestigungseinrichtung zur Befestigung der Datenerfassungseinheit an einer im wesentlichen vertikalen Fläche (Befestigungsfläche) ausgebildet, und die Datenerfassungseinheit derart am Schwenkarm angebracht, dass ein Erfassungsbereich der Datenerfassungseinheit parallel zur Drehachse, und insbesondere in Richtung einer zu überwachenden Fläche bzw. Großfläche, ausgerichtet ist.

Entsprechend kann die Datenerfassungseinheit an einer vertikalen Fläche, wie der Fläche eines Masten etc. montiert werden. Ferner ist durch die Ausrichtung des Erfassungsbereichs parallel zur Drehachse eine Erfassung eines 360° Bereichs um das Befestigungsobjekt sichergestellt.

Als Erfassungsbereich ist hierbei bspw. der Blickwinkel einer Kamera oder der Abtastbereich eines Laserscanners zu verstehen. Als eine Ausrichtung des Erfassungsbereichs parallel zur Drehachse ist demzufolge die Abdeckung einer Achse parallel zur Drehachse durch den Erfassungsbereich und gemäß einem weitergebildeten Aspekt die Ausrichtung der Hauptachse, wie bspw. des Zentrums einer Kamera parallel zur Drehachse zu verstehen.

Gemäß der Erfindung ist die Datenerfassungseinheit als 2D-Laserscanner ausgebildet.

Dies erlaubt eine zuverlässige Detektion auch bei schlechten Wetter- und/oder Lichtverhältnissen, sowohl als auch bei völliger Dunkelheit einsetzbar.

Gemäß der Erfindung ist der 2D-Laserscanner derart mit dem Schwenkarm verbunden, dass ein 2D-Erfassungsbereich des 2D Laserscanners im Wesentlichen rechtwinklig zur Längsachse des Schwenkarms und parallel zur Drehachse ausgerichtet ist.

Durch diese Ausrichtung ist eine Abdeckung ohne Schlagschatten trotz Einsatz lediglich eines 2D-Laserscanners sichergestellt.

Obwohl nur ein 2-D Scanner eingesetzt wird, kann eine 360° Erfassung, ohne Schlagschatten durch den Masten oder Pfosten, erfolgen.

Zudem erlaubt die oben beschriebene Anordnung den Einsatz eines 2-D Laser Scanners zur Erfassung eines dreidimensionalen Bildes. Gegenüber dem Einsatz derzeit im Handel verfügbarer 3D Laserscanner, haben die 2-D Laserscanner eine deutlich erhöhte Auflösung.

Gemäß einem weiteren Aspekt weißt das Objekterfassungssystem ferner eine Datenverarbeitungseinheit auf, welche zur Berechnung der Position und/oder der Ausdehnung von Objekten basierend auf dem 3D-Datensatz, berechnet durch die Berechnungseinheit, ausgebildet ist.

Es können somit basierend auf den erfassten Daten Ausdehnungen und Positionen von Objekten, wie LKWs, erfasst werden.

Gemäß einem weiteren Aspekt ist die Datenverarbeitungseinheit ferner ausgebildet, freie Bereiche zwischen den erfassten Objekten und deren Ausdehnung basierend auf dem 3D-Datensatz, berechnet durch die Berechnungseinheit, zu bestimmen.

Es können somit freie Bereiche, wie freie Parkplätze auf einem Parkplatz oder freie Containerstellplätze aus den Daten berechnet werden.

Gemäß einem weiteren Aspekt weißt das System ferner eine Sendeeinheit zum Senden von Information bezüglich der freien Bereiche an mindestens eine mobile Einheit auf.

Dies erlaubt es den Benutzern des Systems, wie bspw. LKW-Fahrer, über die aktuelle Parkplatzsituation über Mobiltelefone, Navigationsgeräte o.Ä. zu unterrichten.

Gemäß einem Aspekt weist das Objekterfassungssystem ferner die mindestens eine mobile Einheit auf. Die mobile Einheit weißt wiederum eine Empfangseinheit und eine Datenanzeigeeinheit auf und ist ausgebildet, Information von der Sendeeinheit mittels der Empfangseinheit zu empfangen und Information basierend auf der empfangenen Information bezüglich der freien Bereiche an einen Benutzer über die Datenanzeigeeinheit auszugeben.

Dies erlaubt es, Benutzer des Systems, wie bspw. LKW-Fahrer über die aktuellen Parkplatzsituation über Mobiltelefone, Navigationsgeräte o.Ä. zu unterrichten.

Gemäß einem weiteren Aspekt ist eine zu überwachende Fläche entweder ein Parkplatz, ein Containerumschlagplatz oder ein Hafen und die Objekte sind LKWs, PKWs, Busse Container, und/oder Schiffe.

### KURZBESCHREIBUNG DER ZEICHNUNGEN

Im Folgenden werden weitere exemplarische Ausführungsbeispiele der vorliegenden Erfindung mit Verweis auf die Figuren beschrieben.
Fig. 1 zeigt eine Erfassungsvorrichtung nach einem Aspekt;
Fig. 2 zeigt eine vertikale Ansicht auf die Erfassungsvorrichtung;
Fig. 3 zeigt einen Erfassungsvorgang mittels des Objekterfassungssystems.

### DETAILLIERTE BESCHREIBUNG VON AUSFÜHRUNGSBEISPIELEN

Die Darstellungen in den Figuren sind schematisch und nicht maßstäblich.

Werden in der folgenden Beschreibung von Ausführungsbeispielen in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

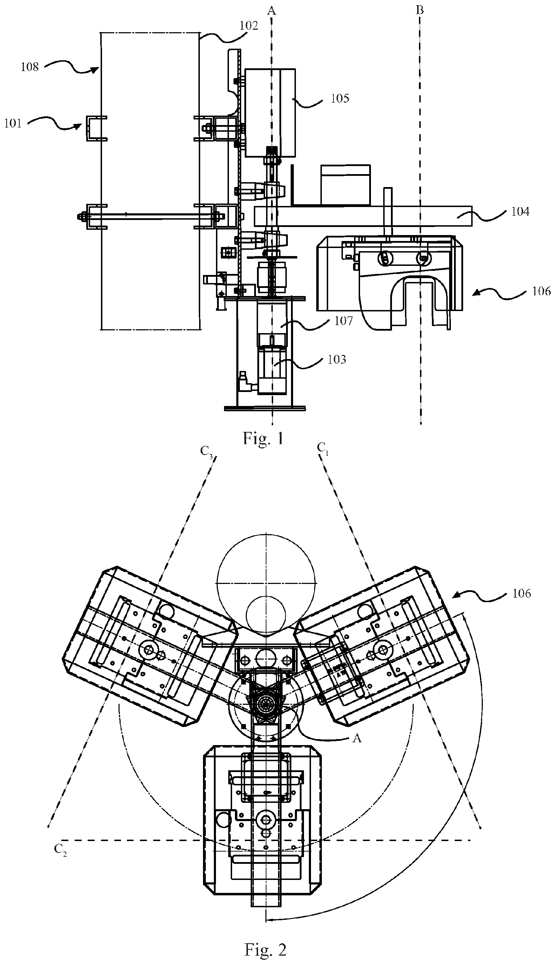

Die Fig. 1 zeigt eine Erfassungsvorrichtung 100 eines Objekterfassungssystems nach einer Ausführungsform der vorliegenden Erfindung.

Die Erfassungsvorrichtung 100 weist hierbei eine Befestigungseinrichtung 101, einen Schwenkmotor 103, einen Schwenkarm 104, eine Ansteuereinheit (nicht gezeigt) sowie eine Datenerfassungseinheit 106 auf.

Die Befestigungseinrichtung 101 ist hierbei nach einem Aspekt derart ausgebildet, dass diese zur Befestigung an einer im wesentlichen vertikalen Fläche (Befestigungsfläche) 102, wie bspw. einem Masten oder einem Pfosten 108 geeignet ist. Sie kann bspw. als eine oder mehrere Schraubklemmen, Schellen oder als Verschraubungsvorrichtungen zur Verschraubung mit einer Befestigungsfläche ausgebildet sein.

Mit der Befestigungseinrichtung 101 ist im vorliegenden Beispiel das Gehäuse des Schwenkmotors 103 verbunden.

Dieser Schwenkmotor 103 ist mit seiner Achse mit einem Ende des Schwenkarms 104 gekoppelt.

Hierbei kann entweder eine Achse des Schwenkmotors direkt mit dem Schwenkarm gekoppelt sein, oder es kann bspw. ein Getriebe 107 oder weitere Komponenten, wie Achsen etc. zwischengeschaltet sein, um hierdurch eine Kopplung zu erzielen.

Wie der Fig. 1 zu entnehmen ist eine Drehachse A, um welche der Schwenkarm geschwenkt wird, bevorzugt im Wesentlichen parallel zu der Oberfläche, mit welcher die Befestigungseinrichtung 101 verbunden ist. Folglich schwenk der Schwenkarm bevorzugt in einer Ebene, welche rechtwinklig zur Drehachse und somit rechtwinklig zur Fläche steht.

Die Datenerfassungseinrichtung 106 ist mit dem Schwenkarm 104 beabstandet von der Drehachse A verbunden, anders ausgedrückt ist die Datenerfassungseinrichtung 106 an einem der Drehachse und dem Schwenkmotor abgewandten Seite des Schwenkarms 104 angeordnet.

Durch diese Anordnung kann die Datenerfassungseinrichtung 106 am Schwenkarm 104 mittels des Schwenkmotors 103 um die Drehachse A rotiert werden.

Ein derartiges Schwenken ist in Fig. 2 dargestellt. Hierbei sind 3 Zustände zu erkennen, in welchen die Datenerfassungseinrichtung einmal in maximaler Rotation in jede der zwei Schwenkrichtungen, sowie einmal in Mittelstellung gezeigt ist.

Der Abstand zwischen Datenerfassungseinheit 106 und Drehachse A, sowie der maximale Drehwinkel bspw. Schwenkwinkel in jede Richtung kann an die Abmessungen des Befestigungsobjekts, wie bspw. des Masts oder Pfostens 108 geeignet angepasst werden.

Wie wiederum der Fig. 1 zu entnehmen, ist ein Datenerfassungsbereich, d.h. ein Bereich in welchem die Datenerfassungseinrichtung Daten aufnimmt, in vorliegenden Beispiel Richtung der Drehachse A ausgerichtet.

Dies soll anhand eines 2D-Laserscanners mit Bezug auf Fig. 1 nun genauer beschrieben werden.

Ein 2D-Laserscanner, auch als LiDAR bezeichnet, sendet Laserimpuls aus und berechnet aus den Reflektionen die Entfernung zu Hindernissen. Diese Laserimpulse werden in einer Ebene mit einer vorgegebenen Winkelauflösung über den Öffnungswinkel des LiDAR ausgegeben. Bspw. wird eine Abtastung über einen Öffnungswinkel von 190° vorgenommen, so dass als Datenausgabe des 2D-Laserscanners Daten zur Entfernung von Messpunkten in einer Ebene (im Folgenden als Datenerfassungsebene bezeichnet) über einen Winkel von 190° (abhängig vom eingesetzten Laserscanner) zur Verfügung stehen.

Die Datenerfassungsebene ist in Fig. 1 mit B gekennzeichnet. Sie liegt hier im Wesentlichen parallel zur Rotationsachse A.

Wird nun die Datenerfassungseinrichtung mit Hilfe des Schwenkarms um die Drehachse A geschwenkt, so bewegt sich die Datenerfassungsebene derart, dass die gesamte Fläche, nebst einer hinter einem Befestigungsobjekt mit der Befestigungsfläche bzw. im wesentlichen vertikalen Fläche 102 liegendem Bereich von der Datenerfassungseinheit sukzessive erfasst werden kann.

Die ist in Fig. 2 dargestellt, welche als gestrichelte Linien, bezeichnet mit C₁ bis C₃ jeweils den 2D Erfassungsbereich des Laserscanners im jeweiligen Schwenk- bzw. Rotationszustand zeigt. Ersichtlich kann auch der Bereich hinter dem Befestigungsobjekt zuverlässig erfasst werden.

Die Ansteuerung des Schwenkmotors erfolgt hierbei durch eine Ansteuereinheit (nicht gezeigt), welche geeignete Ansteuersignale an den Schwenkmotor ausgibt.

Die von der Datenerfassungseinrichtung während des Schwenkvorgangs ausgegebenen Daten können nun zusammen mit Information über die aktuelle Position des Schwenkmotors (und somit des Schwenkarms) zur Berechnung eines 3D Bildes, bevorzugt eines 360° Bildes, verwendet werden.

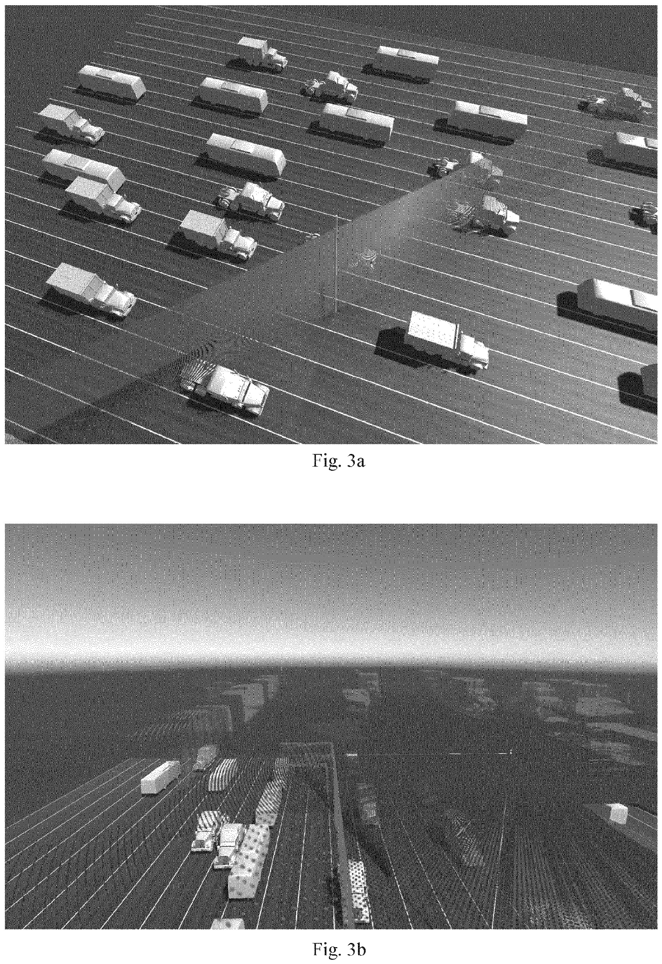

Ein Ergebnis eines derartigen Schwenkvorgangs ist in den Figuren 3a und 3b dargestellt.

Die Figuren 3a und 3b zeigen die Erfassung von Objekten auf einer Fläche, wobei beispielhaft die Erfassung von LKW auf einem Parkplatz gezeigt ist.

Entsprechend der obigen Beschreibung, ist die Erfassungsvorrichtung mit der Datenerfassungseinheit an einem Masten montiert und der Erfassungsbereich, welcher als gepunktete Fläche dargestellt ist, ist parallel zur Rotationsachse und in Richtung der zu überwachenden Fläche ausgerichtet.

Nach einer Rotation des Laserscanners mittels des Schwenkmotors kann die Berechnungseinheit nun die Messpunkte, welche durch die Datenerfassungseinheit 106 ausgegeben werden, zusammensetzen. Hierzu können neben den Daten der Datenerfassungseinheit 106 Daten zur Position des Schwenkmotors 103 herangezogen werden. Derartige Daten können einerseits von der Ansteuereinheit oder andererseits vom Schenkmotors selbst, oder auf andere Weise bspw. durch Kalibrierung mittels externer Punkte erzielt werden.

Durch die Zusammensetzung der Messpunkte durch die Berechnungseinheit ergibt sich die in Fig. 3b dargestellte Punktwolke an Messpunkten über die Gesamtfläche.

Ersichtlich kann eine Erfassung eines kompletten 360° Bereichs ohne Schlagschatten durch den Masten vorgenommen werden.

In einer Ausführungsform umfasst das Objekterfassungssystem ferner eine Datenverarbeitungseinheit (nicht gezeigt). Die Datenverarbeitungseinheit ist hierbei eingerichtet, mittels des durch die Berechnungseinheit berechneten 3D-Datensatzes die Position und/oder Ausdehnung von erfassten Objekten, wie bspw. erfassten LKW zu berechnen.

Ferner kann die Datenverarbeitungseinheit bevorzugt dazu ausgebildet sein, aus dem 3D-Datensatz Bereiche zu extrahieren, welche nicht durch Objekte belegt sind, sowie bevorzugt die Ausdehnung und/oder Position der freien Bereiche zu bestimmen.

Somit können bspw. freie Parkplätze für LKW oder PKW auf einem Parkplatz, freie Stellplätze für Container in einem Containerhafen oder freie Liegeplätze in einem Hafen bestimmt werden.

Daten der Datenverarbeitungseinheit können ferner bevorzugt mittels einer (nicht dargestellten) Übertragungseinheit an Endgeräte (nicht dargestellt) übermittelt werden.

Mittels der Endgeräte, welche als Datenanzeigeeinheit bspw. ein Display aufweisen können, können Benutzer des Systems über eine aktuelle Belegung der Fläche unterrichtet werden.

Der Begriff "Einheit" in der vorrausgehenden Beschreibung ist nicht beschränkt auf eine physikalische Einheit zu verstehen. Es kann sich bei den oben genannten Einheiten wie Ansteuereinheit, Datenerfassungseinheit und Berechnungseinheit, auch bspw. um Software oder Routinen handeln, welche auf einem gemeinsamen Chip oder auch verteilt über mehrere Chips oder Computer implementiert werden können.

Die Ansteuereinheit, die Datenerfassungseinheit und/oder die Berechnungseinheit können bspw. in der Elektronikbox 105 vorgesehen sein. Jedoch können alle oder einige der Komponenten auch in externen Vorrichtungen vorgesehen sein, welche bspw. per Funk oder kabelgebunden angebunden sein können.

Ergänzend ist darauf hinzuweisen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Objekterfassungssystem zur Erfassung von Objekten, umfassend:
- eine Erfassungsvorrichtung (100) mit
- einer Befestigungseinrichtung (101) zur Befestigung der Datenerfassungseinheit an einem Befestigungsobjekt;
- einem Schwenkmotor (103), wobei der Schwenkmotor mit der Befestigungseinrichtung (101) verbunden ist;
- einem Schwenkarm (104), welcher an einem Ende derart mit dem Schwenkmotor (103) gekoppelt ist, dass der Schwenkarm (104) mittels des Schwenkmotors (103) um eine Drehachse (A) schwenkbar ist;
- einer Ansteuereinheit zur Ansteuerung des Schwenkmotors (104); und
- einer Datenerfassungseinheit (106) zur Erfassung von Objektinformation, wobei die Datenerfassungseinheit (106) beabstandet von der Drehachse (A) an dem Schwenkarm angebracht ist und die Datenerfassungseinheit (106) als 2D-Laserscanner ausgebildet ist; und
- der 2D-Laserscanner derart mit dem Schwenkarm (104) verbunden ist, dass ein 2D-Erfassungsbereich des 2D-Laserscanners im Wesentlichen rechtwinklig zur Längsachse des Schwenkarms (104) und parallel zur Drehachse (A) ausgerichtet ist; und
- eine Berechnungseinheit zur Berechnung eines 3D-Datensatzes aus den Daten der Datenerfassungseinheit und Daten bezüglich der Bewegung des Schwenkmotors.

2. Objekterfassungssystem nach Anspruch 1, wobei
das Objekterfassungssystem zur Erfassung von Objekten auf einer Fläche ausgebildet ist.

3. Objekterfassungssystem nach einem der vorrangegangenen Ansprüche, wobei:
- die Befestigungseinrichtung (101) zur Befestigung der Datenerfassungseinheit (106) an einer im wesentlichen vertikalen Fläche (102) ausgebildet ist; und
- die Datenerfassungseinheit (106) derart am Schwenkarm (104) angebracht ist, dass ein Erfassungsbereich der Datenerfassungseinheit (106) parallel zur Drehachse (A) ausgerichtet ist.

4. Objekterfassungssystem nach Anspruch 3, wobei:
die Datenerfassungseinheit (106) derart am Schwenkarm (104) angebracht ist, dass der Erfassungsbereich der Datenerfassungseinheit (106) in Richtung einer zu überwachenden Fläche ausgerichtet ist.

5. Objekterfassungssystem nach einem der vorrangegangenen Ansprüche, wobei
- die Datenerfassungseinheit (106) als Laserscanner ausgebildet ist.

6. Objekterfassungssystem nach einem der vorrangegangenen Ansprüche, ferner umfassend:
- eine Datenverarbeitungseinheit zur Berechnung der Position und/oder der Ausdehnung von Objekten basierend auf dem 3D-Datensatz, berechnet durch die Berechnungseinheit.

7. Objekterfassungssystem nach Anspruch 6, wobei
- die Datenverarbeitungseinheit ferner ausgebildet ist, freie Bereiche zwischen den erfassten Objekten und deren Ausdehnung basierend auf dem 3D-Datensatz, berechnet durch die Berechnungseinheit, zu bestimmen.

8. Objekterfassungssystem nach einem der vorrangegangenen Ansprüche, ferner umfassend
- eine Sendeeinheit zum Senden von Information bezüglich der freien Bereiche an mindestens eine mobile Einheit.

9. Objekterfassungssystem nach Anspruch 8, ferner umfassend
- die mindestens eine mobile Einheit, wobei
- die mobile Einheit eine Empfangseinheit und eine Datenanzeigeeinheit aufweist und ausgebildet ist, Information von der Sendeeinheit mittels der Empfangseinheit zu empfangen und Information basierend auf der empfangenen Information bezüglich der freien Bereiche an einen Benutzer über die Datenanzeigeeinheit auszugeben.

10. Objekterfassungssystem nach einem der vorrangegangenen Ansprüche, wobei
- eine zu überwachende Fläche eines ist von
- einem Parkplatz;
- einem Containerumschlagplatz; oder
- einem Hafen; und
- die Objekte mindestens eines sind von:
- LKWs;
- PKWs;
- Bussen;
- Containern; und/oder
- Schiffen.

## Claims

1. Object detection system for detecting objects, comprising:
- a detection apparatus (100) with
- a mounting unit (101) for mounting the data acquisition unit at a mounting object;
- a swing motor (103), wherein the swing motor is connected to the mounting unit (101);
- a swing arm (104), which is coupled at one end with the swing motor (103) such, that the swing arm (104) is pivotable about a swing axis (A) by means of the swing motor (103);
- a controlling unit for controlling the swing motor (104); and
- a data acquisition unit (106) for acquiring object information, wherein the data acquisition unit (106) is attached to the swing arm spaced from the swing axis (A) and the data acquisition unit (106) is formed as 2D-laser-scanner; and
- the 2D-laser-scanner is connected to the swing arm (104) such, that a 2D-acquisition area of the 2D-laser-scanner is substantially oriented orthogonal to the longitudinal axis of the swing arm (104) and parallel to the swing axis (A); and
- a computation unit for computing a 3D data set from the data of the data acquisition unit and data regarding to the movement of the swing motor.

2. Object detection system according to claim 1, wherein
the object detection system is configured for detecting objects on a surface.

3. Object detection system according to any of the preceding claims, wherein:
- the mounting unit (101) is configured for mounting the data acquisition unit (106) to a substantially vertical surface (102); and
- the data acquisition unit (106) is attached to the swing arm (104) such, that an acquisition area of the data acquisition unit (106) is oriented parallel to the swing axis (A).

4. Object detection system according to claim 3, wherein:
the data acquisition unit (106) is attached to the swing arm (104) such, that the acquisition area of the data acquisition unit (106) is oriented in direction of a surface to be monitored.

5. Object detection system according to any of the preceding claims, wherein:
- the data acquisition unit (106) is formed as laser scanner.

6. Object detection system according to any of the preceding claims, further comprising:
- a data processing unit for determining the position and/or the dimensions of objects based on the 3D data set, computed by the computation unit.

7. Object detection system according to claim 6, wherein
- the data processing unit is further configured to determine free areas between the detected objects and their dimensions based on the 3D data set, computed by the computation unit.

8. Object detection system according to any of the preceding claims, further comprising
- a transmitting unit for transmitting information regarding the free areas to at least one mobile unit.

9. Object detection system according to claim 8, further comprising
- at least one mobile unit, wherein
- the mobile unit comprises a receiving unit and a data displaying unit and is configured to receive information from the transmitting unit by means of the receiving unit and output information based on the received information regarding the free areas to a user via the data displaying unit.

10. Object detection system according to any of the preceding claims, wherein
- the surface to be monitored is one of
∘ a parking space;
∘a container transshipment center; or
∘ a harbour; and
- the objects are at least one of:
∘ trucks;
∘ cars;
∘ busses;
∘ containers; and/or
∘ ships.

## Revendications

1. Système de détection d'objets destiné à détecter des objets, comprenant :
- un dispositif de détection (100) comprenant
- un dispositif de fixation (101) destiné à fixer l'unité de détection de données à un objet de fixation ;
- un moteur de pivotement (103), le moteur de pivotement étant relié au dispositif de fixation (101) ;
- un bras de pivotement (104) qui est couplé par une extrémité au moteur de pivotement (103) de manière à ce que le bras de pivotement (104) puisse être amené à pivoter autour d'un axe de rotation (A) par le moteur de pivotement (103) ;
- une unité de commande destinée à commander le moteur de pivotement (104) ; et
- une unité de détection de données (106) destinée à acquérir une information d'objet, l'unité de détection de données (106) étant montée sur le bras de pivotement de manière espacée de l'axe de rotation (A) et l'unité de détection de données (106) étant conçue sous la forme d'un scanner à laser 2D ; et
- le scanner à laser 2D est relié au bras de pivotement (104) de manière à ce qu'une zone de détection 2D du scanner à laser 2D soit orientée sensiblement perpendiculairement à l'axe longitudinal du bras de pivotement (104) et parallèlement à l'axe de rotation (A) ; et
- une unité de calcul destinée à calculer un jeu de données 3D à partir des données de l'unité de détection de données et de données concernant le mouvement du moteur de rotation.

2. Système de détection d'objets selon la revendication 1, dans lequel le système de détection d'objets est conçu pour détecter des objets sur une surface.

3. Système de détection d'objets selon l'une des revendications précédentes, dans lequel :
- le dispositif de fixation (101) est conçu pour fixer l'unité de détection de données (106) sur une surface sensiblement verticale (102) ; et
- l'unité de détection de données (106) est fixée au bras de pivotement (104) de manière à ce qu'une zone de détection de l'unité de détection de données (106) soit orientée parallèlement à l'axe de rotation (A).

4. Système de détection d'objets selon la revendication 3, dans lequel :
l'unité de détection de données (106) est fixée au bras de pivotement (104) de manière à ce qu'une zone de détection de l'unité de détection de données (106) soit orientée dans la direction d'une surface à surveiller.

5. Système de détection d'objets selon l'une des revendications précédentes, dans lequel
- l'unité de détection de données (106) est conçue sous la forme d'un scanner à laser.

6. Système de détection d'objets selon l'une des revendications précédentes, comprenant en outre :
- une unité de traitement de données destinée à calculer la position et/ou l'extension d'objets sur la base du jeu de données 3D calculé par l'unité de calcul.

7. Système de détection d'objets selon la revendication 6, dans lequel
- l'unité de traitement de données est en outre conçue pour déterminer des zones libres entre les objets détectés et leur étendue sur la base du jeu de données 3D calculé par l'unité de calcul.

8. Système de détection d'objets selon l'une des revendications précédentes, comprenant en outre
- une unité de transmission destinée à transmettre une information concernant les zones libres à au moins une unité mobile.

9. Système de détection d'objets selon la revendication 8, comprenant en outre
- ladite au moins une unité mobile, dans lequel
- l'unité mobile comporte une unité de réception et une unité d'affichage de données et est conçue pour recevoir une information en provenance de l'unité de transmission au moyen de l'unité de réception et pour présenter à un utilisateur, par l'intermédiaire de l'unité d'affichage de données, une information basée sur l'information reçue concernant les zones libres.

10. Système de détection d'objets selon l'une des revendications précédentes, dans lequel
- une zone à surveiller est l'une des suivantes :
- un parc de stationnement ;
- une zone de transbordement de conteneurs ; ou
- un port ; et
- les objets sont au moins l'un des suivants :
- des camions ;
- des automobiles ;
- des autobus ;
- des conteneurs ; et/ou
- des navires.
